# EUROPÄISCHE PATENTANMELDUNG

(11) **EP 4 261 182 A1**
(43) Veröffentlichungstag der Anmeldung: **18.10.2023**
(21) Anmeldenummer: 23164666.2
(22) Anmeldetag: 28.03.2023
(51) Int. Cl.: B66F 9/08, B66F 17/00

(54) **FLURFÖRDERZEUG MIT EINER TRAGFÄHIGKEITS-KONTROLLEINRICHTUNG**

(30) Priorität: 12.04.2022 DE 102022108939
(71) Anmelder: Linde Material Handling GmbH, 63743 Aschaffenburg (DE)
(72) Erfinder: FRANCOIS, Yves-Jocelyn, 63739 Aschaffenburg (DE)
(74) Vertreter: Patentship Patentanwaltgesellschaft

(57) **Zusammenfassung**

Die Erfindung betrifft ein Flurförderzeug mit einem Hubgerüst und einem, am Hubgerüst höhenbeweglich angeordneten, Lastaufnahmemittel und einer Tragfähigkeits-Kontrolleinrichtung zur Kontrolle der Tragfähigkeit des Flurförderzeugs. Es wird vorgeschlagen, dass die Tragfähigkeits-Kontrolleinrichtung mindestens eine Biegemoment-Sensorik umfasst, die dazu ausgebildet ist, ein Biegemoment in einem oberen Bereich des Hubgerüstes zu erfassen, sowie eine, mit der Biegemoment-Sensorik in Wirkverbindung stehende, Datenverarbeitungseinrichtung umfasst, die dazu eingerichtet ist, die Sensordaten der Biegemoment-Sensorik auszuwerten und die Einhaltung der Tragfähigkeit des Flurförderzeugs durch Einhaltung einer Gleich-Biegemoment-Kennlinie (BC) mit gleichen Biegemomenten zu kontrollieren.

## Beschreibung

Die Erfindung betrifft ein Flurförderzeug mit einem Hubgerüst und einem, am Hubgerüst höhenbeweglich angeordneten, Lastaufnahmemittel und einer Tragfähigkeits-Kontrolleinrichtung zur Kontrolle der Tragfähigkeit des Flurförderzeugs.

Flurförderzeuge sind zur Handhabung von Lasten mit einem Lastaufnahmemittel versehen, das von einem am Hubgerüst anhebbaren und absenkbaren Hubschlitten und einem daran befestigten Anbaugerät gebildet ist. Als Anbaugerät kann beispielsweise eine von Gabelzinken bestehende Lastgabel eingesetzt werden, mittels der eine Last, beispielsweise eine Palette unterfahren werden kann. Als Anbaugerät kann ebenfalls eine Klammereinrichtung, beispielsweise eine Ballen- oder Rollenklammer, eingesetzt werden, mit der eine Last durch seitliches Klemmen gehalten wird. An dem Hubschlitten ist zum Heben und Senken des Lastaufnahmemittels ein flexibles Zugmittel befestigt, beispielsweise eine Hubkette, die mit einem ersten Ende an dem Hubschlitten befestigt ist, über eine Umlenkrolle geführt ist und mit einem zweiten Ende an dem Hubgerüst befestigt ist. Die Betätigung des flexiblen Zugmittels erfolgt durch eine Hubzylindereinrichtung, die in der Regel einen oder mehrere Hubzylinder mit jeweils einer ein- und ausfahrenden Kolbenstange umfasst.

Häufig sind Flurförderzeuge mit einem Hubgerüst versehen, das um eine zumindest in bestimmten Betriebszuständen außerhalb der Radbasis angeordnete Neigeachse in einer Hubgerüstlagerung schwenkbar ist. Solche Flurförderzeuge sind beispielsweise die üblichen Gegengewichts-Gabelstapler, bei denen die Hubgerüst-Neigeachse im frontseitigen Fahrzeugbereich quer zur Fahrzeuglängsachse angeordnet ist. Darüber hinaus nehmen auch sogenannte Quer-Gabelstapler die Last außerhalb der Radbasis mit einem quer zur Fahrtrichtung verschiebbaren Hubgerüst auf. Die Beförderung der Last erfolgt, nachdem das Hubgerüst wieder ganz zurückgezogen ist. Auch Schubmast-Gabelstapler weisen ein verschiebbares Hubgerüst zur Aufnahme der Last außerhalb der Radbasis auf. Der besseren Übersichtlichkeit halber seien die nachfolgenden Ausführungen auf Gegengewichts-Gabelstapler bezogen, jedoch nicht auf diese beschränkt.

Durch die Aufnahme der zu transportierenden Last außerhalb der Radbasis entsteht bei Gegengewichts-Gabelstaplern ein Drehmoment um die Vorderachse. Ein gegensinnig wirkendes Drehmoment wird vom Eigengewicht des Gabelstaplers gebildet. Das aus der Last herrührende Drehmoment ist abhängig von der Gewichtskraft der Last und vom Abstand des Lastschwerpunktes zur Kippachse (Vorderachse), der im Übrigen auch bei einer Neigebewegung des Hubgerüstes verändert wird. Bei Aufnahme zu großer Last oder bei zu großem Abstand des Lastschwerpunktes von der Kippachse besteht die Gefahr, dass die Kippgrenze des Gabelstaplers überschritten wird. Selbst wenn im statischen Zustand die Kippgrenze noch nicht erreicht ist, kann infolge dynamischer Kräfte bei fahrendem Fahrzeug, beispielsweise Fliehkräfte bei Kurvenfahrt oder Massenkräfte beim Abbremsen und Beschleunigen, der Gabelstapler umkippen. Es hat daher bereits vielfältige Bestrebungen gegeben, dies zu verhindern oder zumindest rechtzeitig dem Fahrer anzuzeigen, damit dieser Gegenmaßnahmen ergreifen kann.

Üblicherweise ist an jedem Flurförderzeug mindestens ein Tragfähigkeitsschild mit für die Fahrzeugkonfiguration zulässigen Tragfähigkeitswerten angebracht. Es handelt sich dabei um eine Tabelle, auf der die Tragfähigkeitswerte in Bezug auf den verwendeten Lastschwerpunkt und die Hubhöhe angegeben werden. Auf Grund der begrenzten Anzahl von Zeilen und Spalten ist nur eine grobe Übersicht der Tragfähigkeiten möglich. Die Daten sind daher in Stufen mit teilweise großen Sprüngen angeordnet.

Alternativ werden Tragfähigkeiten auch als Kurvenschar dargestellt. Auf diese Weise können auch Zwischenwerte abgelesen werden. Allerdings ist diese Methode relativ ungenau und fehleranfällig.

Die Darstellung der Tragfähigkeiten erfolgt in einem starren Rahmen. Der Benutzer hat keine Möglichkeit, mit den Tragfähigkeitsdaten zu interagieren, um beispielsweise die Tragfähigkeit für den für ihn benötigten Lastschwerpunkt und/oder die benötigte Hubhöhe abzufragen. Außerdem kann die Tragfähigkeit auch nur durch das Tragfähigkeitsschild am Flurförderzeug geprüft werden, wodurch die Planung der Aufgaben zum Beispiel durch den Fuhrparkleiter nicht optimiert ist.

Aus der DE 32 03 553 A1 ist es bekannt, den Ladezustand des Gabelstaplers aus dem Druck im Hubzylinder und dem Druck im Neigezylinder des Hubgerüstes zu ermitteln. Der jeweilige Ladezustand wird auf einem Anzeigefeld im Sichtbereich des Fahrers graphisch dargestellt. Wenn die Gefahr besteht, dass der Gabelstapler aufgrund eines ungünstigen Ladezustandes umkippt, wird dies zusätzlich signalisiert. Die Ermittlung des Ladezustandes und/oder des Lastgewicht über den hydraulischen Druck im Hubzylinder hat den Nachteil, dass infolge der Reibung der Hubzylinder und die daraus resultierende Hysterese sowie infolge der Durchflusswiderstände eine Druckkraft gemessen wird, die nicht in allen Fällen der tatsächlichen Gewichtskraft entspricht, so dass entsprechend hohe Ungenauigkeiten auftreten.

Aus der EP 0 483 493 B1 ist ein Flurförderzeug mit einer Überwachungseinrichtung zum Detektieren und Anzeigen des Belastungszustands bekannt, bei dem in der Hubgerüstlagerung Messvorrichtungen vorgesehen sind, die zur Erfassung von vertikalen und horizontalen Lagerkräften ausgebildet sind. Auf diese Weise können sowohl die Gewichtskraft der Last als auch das Lastmoment sowie der seitliche Versatz der Last gemessen werden.

Die in dieser Patentschrift dargestellte Methode zur Überwachung des Belastungszustands ist jedoch in der Praxis nur bedingt einsatztauglich. Weder die beschriebene Anzeige des Belastungszustands noch die beschriebene Methode, nach welcher in das Antriebssystem des Flurförderzeugs eingegriffen werden sollte, um die Kippstabilität des Flurförderzeugs sicherzustellen, führen zu einem passablen Ergebnis. Der Nachteil der Methode liegt darin, dass die erfassten Größen der Belastungskraft bzw. des Belastungsmoments direkt für die Anzeige und für den Eingriff in das Antriebssystem des Flurförderzeugs herangezogen werden. So wird auf dem Anzeigegerät ein Koordinatensystem dargestellt, in dem auf der Abszisse das Belastungsmoment und auf der Ordinate die Belastungskraft als Variable vorgesehen sind. Außerdem werden die Belastungskraft und/oder das Belastungsmoment direkt als Grenzwerte vorgegeben.

Diese Methode funktioniert nur bei sehr langsamen Hubgerüst-Betätigungen. Aber bei Betätigungen, wie sie häufig in der Praxis vorkommen, gerät die Methode schnell an ihre Grenzen. Wenn man zum Beispiel eine angehobene Last durch Vorneigen nach vorne beschleunigt, dann bewirkt diese Beschleunigung dynamisch eine Reduzierung des Lastmoments, während dieselbe Betätigung stationär oder quasi statisch genau das Gegenteil bewirken würde (Versatz der Last nach vorne). Der regelungstechnische Begriff dafür ist ein "nicht-minimal-phasiges" Verhalten: Die Ableitung der Neigegeschwindigkeit wirkt sich auf das Lastmoment mit einem anderen Vorzeichen aus als deren Integral. Je ausgeprägter die Beschleunigung nach vorne ist, umso niedriger sind das Lastmoment und die angezeigte Kritikalität des Belastungszustands. Auch der Eingriff auf das Vorneigen ist schwächer (bis inexistent). Allerdings kehrt sich der Effekt um, sobald die Neigebetätigung aufhört. Dann wird das Lastmoment plötzlich größer mit allen dazu gehörenden möglichen Folgen.

Eine erste Abhilfemaßnahme könnte eine pauschale Reduzierung der Dynamik der Hubgerüst-Betätigung sein. Eine solche Maßnahme würde aber keine Akzeptanz bei Kunden und Betreibern der Flurförderzeuge finden.

Die bisher bekannten Tragfähigkeits-Kontrolleinrichtungen arbeiten im Wesentlichen mit drei Kerngrößen, nämlich mit dem Lastgewicht, der Lastschwerpunktposition und der Hubhöhe. Für die Erfassung der Hubhöhe ist jedoch ein entsprechender Hubhöhensensor erforderlich. Alle bislang bekannten Tragfähigkeits-Kontrolleinrichtungen benötigen somit zur Erfassung der Hubhöhe einen Hubhöhensensor, der entsprechend aufwändig und teuer ist. Zudem ergibt sich eine inhärente Komplexität, die drei Sensoren erfordert, um die drei Kerngrößen explizit zu ermitteln.

Der vorliegenden Erfindung liegt die Aufgabe zugrunde, ein Flurförderzeug der eingangs genannten Art so auszugestalten, dass die Kontrolle der Tragfähigkeit des Flurförderzeugs mit verringertem sensorischen Aufwand ermöglicht wird.

Diese Aufgabe wird erfindungsgemäß dadurch gelöst, dass die Tragfähigkeits-Kontrolleinrichtung mindestens eine Biegemoment-Sensorik umfasst, die dazu ausgebildet ist, ein Biegemoment in einem oberen Bereich des Hubgerüstes zu erfassen, sowie eine, mit der Biegemoment-Sensorik in Wirkverbindung stehende, Datenverarbeitungseinrichtung umfasst, die dazu eingerichtet ist, die Sensordaten der Biegemoment-Sensorik auszuwerten und die Einhaltung der Tragfähigkeit des Flurförderzeugs durch Einhaltung einer Gleich-Biegemoment-Kennlinie mit gleichen Biegemomenten zu kontrollieren.

Dabei geht die Erfindung von der Überlegung aus, dass das Sensorsignal der Biegemoment-Sensorik allein ein Richtmaß für eine Bewertung der Einhaltung der Tragfähigkeit im Ganzen darstellt.

Gemäß einer bevorzugten Weiterbildung des Erfindungsgedankens wird dieses Richtmaß in Kombination mit einer Lastgewicht-Information verfeinert. Hierzu umfasst die Tragfähigkeits-Kontrolleinrichtung zusätzlich mindestens eine Lastgewicht-Sensorik, die ebenfalls mit der Datenverarbeitungseinrichtung in Wirkverbindung steht. Weiterhin ist die Datenverarbeitungseinrichtung dazu eingerichtet, die Sensordaten der Lastgewicht-Sensorik zusätzlich zu den Sensordaten der Biegemoment-Sensorik auszuwerten und eine Lastgewicht-spezifische Gleich-Biegemoment-Kennlinie zu bestimmen.

Mit besonderem Vorteil verfügt die Datenverarbeitungseinrichtung über ein Computerprogramm mit einem Algorithmus, der dazu eingerichtet ist, die Gleich-Biegemoment-Kennlinie an eine vorgegebene, Fahrzeug-spezifische, Tragfähigkeitskennlinie anzunähern.

Dabei verfügt das Computerprogramm vorzugsweise über eine Einlernfunktion, die dazu eingerichtet ist, die bei einer Ansteuerung von Punkten auf der Tragfähigkeitskennlinie von der Biegemoment-Sensorik erfassten Biegemomente abzuspeichern und als Stützpunkte zur Bestimmung der Gleich-Biegemoment-Kennlinie zu verwenden.

Eine vorteilhafte Weiterbildung dieser Ausgestaltung sieht vor, dass die Einlernfunktion dazu eingerichtet ist, die bei der Ansteuerung der Punkte auf der Tragfähigkeitskennlinie von der Lastgewicht-Sensorik erfassten Lastgewichte ebenfalls abzuspeichern und zur Bestimmung der Lastgewicht-spezifischen Gleich-Biegemoment-Kennlinie zu verwenden.

Die Funktionsweise der Einlernfunktion kann folgendermaßen beschrieben werden:
Zweckmäßigerweise steht die Datenverarbeitungseinrichtung mit einer Fahrzeugsteuerungseinrichtung des Flurförderzeugs in Wirkverbindung, so dass die Datenverarbeitungseinrichtung Lasthandhabungsmanöver des Flurförderzeugs während des Einlernvorgangs steuern kann. Es werden einige Punkte der Fahrzeug-spezifischen Tragfähigkeitskennlinie, die sich beispielsweise aus einem vorgegebenen Tragfähigkeitsschild ergeben, real angefahren und eingelernt. Beispielsweise wird bei einem Flurförderzeug mit einer Nennlast von 3000 kg, die gemäß Tragfähigkeitsschild auf eine maximal zulässige Hubhöhe von 5,3 m angehoben werden darf, ein Lastgewicht von 3000 kg (entsprechend der Nennlast) auf eine Hubhöhe von 5,3 m (entsprechend der maximal zulässigen Hubhöhe für die Nennlast) gehoben, ein Lastgewicht von 2400 kg auf eine Hubhöhe von 6 m und ein Lastgewicht von 1500 kg auf 7,2 m gehoben.

Dabei erfassen bei jedem angefahrenen Punkt auf der Tragfähigkeitskennlinie die Biegemoment-Sensorik das Biegemoment und die Lastgewicht-Sensorik das Lastgewicht. Die jeweiligen Sensordaten werden durch die Datenverarbeitungseinrichtung abgespeichert. Diese Informationen werden als Stützpunkte der Kennlinie des maximal zulässigen Biegemoment-Sensorsignalwerts in Abhängigkeit vom Lastgewicht benutzt. Die Datenverarbeitungseinrichtung kann dann anhand dieser Kennlinie und des gemessenen Lastgewichts das Richtmaß für die Einhaltung der Tragfähigkeit ermitteln und anwenden.

Sinnvoll wäre es darüber hinaus, im Laufe des Einlernvorgangs die Hubhöhe der angefahrenen Punkte zusätzlich zu speichern. Diese Zuordnung zum Lastgewicht und zum Biegemoment-Sensorsignalwert ist hilfreich für weitere Anwendungen.

Eine weitere Ausgestaltung der Einlernfunktion sieht vor, dass man alle anzufahrenden Punkte mit derselben Last, beispielsweise mit einem Lastgewicht von 1500 kg, anfährt. Dadurch kann man sich den Aufwand für die Änderung der Last sparen. Außerdem ist damit auch ein Sicherheitsgewinn verbunden, da mit niedrigerer Last ein sicherer Betrieb möglich ist. In diesem Fall muss in der Datenverarbeitungseinrichtung nur hinterlegt sein, welche Last man an dem Punkt hätte haben sollen. Über eine Dreisatz-Rechnung kann dann der Wert des Biegemoment-Sensorsignals dementsprechend angepasst werden. Der lineare Zusammenhang zwischen Lastgewicht und Biegemoment-Sensorsignal sollte bei gegebener Hubhöhe erhalten bleiben.

Um einen unsicheren Betrieb des Flurförderzeugs außerhalb der gesicherten Tragfähigkeit des Flurförderzeugs zu vermeiden, ist gemäß einer besonders vorteilhaften Ausführungsform der Erfindung vorgesehen, dass die Datenverarbeitungseinrichtung dazu eingerichtet ist, bei Überschreitung eines vorgegebenen Biegemoment-Schwellwertes eine Überschreitung der Tragfähigkeit des Flurförderzeugs zu erkennen und eine Reaktionsfunktion einzuleiten.

Insbesondere kann die Datenverarbeitungseinrichtung dazu eingerichtet sein, die Überschreitung des vorgegebenen Biegemoment-Schwellwertes bei einer Überschreitung eines vorgegebenen Wertes, insbesondere von 40%, bevorzugt 50%, eines Fahrzeug-spezifischen Nenn-Lastmoments zu erkennen. Der vorgegebene Wert ist insbesondere Hubgerüst-spezifisch und kann beispielsweise im Rahmen eines Kalibriervorgangs eingelernt werden.

Dabei kann die Reaktionsfunktion auf unterschiedliche Weisen realisiert werden:
Die Datenverarbeitungseinrichtung kann dazu eingerichtet sein, als Reaktionsfunktion eine Warnmeldung an eine, mit der Datenverarbeitungseinrichtung in Wirkverbindung stehende, optische und/oder akustische Warneinrichtung auszugeben. Somit kann eine Betriebsperson gewarnt werden, um das Flurförderzeug in einen sicheren Zustand zu versetzen.

Zusätzlich oder alternativ kann die Datenverarbeitungseinrichtung auch dazu eingerichtet sein, als Reaktionsfunktion regelnd in eine, mit der Datenverarbeitungseinrichtung in Wirkverbindung stehende, Fahrzeugsteuerungseinrichtung einzugreifen, beispielsweise auf die Fahrfunktion des Flurförderzeugs und/oder auf die Hubfunktion des Lastaufnahmemittels. Auf diese Weise kann als Reaktionsfunktion der Fahrfunktion das Flurförderzeug zum Beispiel automatisch durch eine Geschwindigkeitsreduzierung abgebremst werden und/oder durch eine Beschleunigungsreduzierung die Beschleunigung des Flurförderzeugs verringert werden, um Gefahren zu vermeiden. Alternativ oder zusätzlich kann als Reaktionsfunktion der Hubfunktion beispielsweise eine vom Fahrer des Flurförderzeugs angeforderte Betätigung eines Hubantriebs eingeschränkt werden, beispielsweise eine angeforderte Hubgeschwindigkeit des Lastaufnahmemittels reduziert und/oder das Heben des Lastaufnahmemittels vollständig verhindert werden.

Eine zweckmäßige Ausgestaltung der Erfindung sieht vor, dass die Biegemoment-Sensorik mindestens einen Dehnungs-Mess-Sensor umfasst, der im oberen Bereich, insbesondere im oberen Drittel, des Hubgerüstes angeordnet ist.

Gemäß einer vorteilhaften Ausführungsform der Erfindung weist das Hubgerüst mindestens einen Hauptmast und mindestens einen, am Hauptmast höhenbeweglich angeordneten, Ausfahrmast auf, wobei durch Ausfahren des Ausfahrmastes das Lastaufnahmemittel auf eine gewünschte Hubhöhe gehoben werden kann. In diesem Fall ist es von Vorteil, wenn die Biegemoment-Sensorik, insbesondere der Dehnungs-Mess-Sensor, im oberen Bereich, insbesondere im oberen Drittel, des Hauptmastes angeordnet ist. Bevorzugt ist die Biegemoment-Sensorik im Wesentlichen an derselben Höhenposition des Hauptmastes angeordnet, an der sich bei vollständig angehobenem Ausfahrmast der Ausfahrmast am Hauptmast abstützt, beispielsweise mittels entsprechenden am unteren Bereich des Ausfahrmastes angeordneten Mastrollen, mit denen der Ausfahrmast am Hauptmast geführt. Die Biegemoment-Sensorik ist somit idealerweise am Hauptmast auf derselben Höhe angeordnet wie die im Hauptmast geführte untere Mastrolle des Ausfahrmastes im vollständig angehobenem Zustand des Ausfahrmastes.

Die Erfindung bietet eine ganze Reihe von Vorteilen:
Die Erfindung ermöglicht es, die Tragfähigkeit eines Flurförderzeugs, insbesondere eines Gabelstaplers, ohne großen sensorischen Aufwand zu kontrollieren. Dabei wird das Lastmoment auf einem Hubhöhen-abhängigen Wert gemäß den Vorgaben des Tragfähigkeitsschildes begrenzt. Bedingt durch die, der Erfindung zugrunde liegenden, physikalischen Zusammenhänge ist die Qualität der Tragfähigkeits-Kontrolle bei weitem höher als die herkömmlicher Tragfähigkeits-Kontrolleinrichtungen. Dabei stützt sich die Erfindung auf eine, insbesondere einen Dehnungs-Mess-Sensor umfassende, Biegemoment-Sensorik. Dehnungs-Mess-Sensoren sind bekanntlich sowohl sehr robust als auch sehr kostengünstig.

Weitere Vorteile und Einzelheiten der Erfindung werden anhand der in den schematischen Figuren dargestellten Ausführungsbeispiele näher erläutert. Hierbei zeigen
- Figur 1: ein Tragfähigkeitsschild eines, als Gabelstapler ausgebildeten, Flurförderzeugs,
- Figur 2: eine Darstellung von Tragfähigkeitskennlinien verschiedener Tragfähigkeitsschilder in normierter Form,
- Figur 3: eine Darstellung von Kennlinien der relativen Hubhöhe in Abhängigkeit vom relativen Lastmoment für verschiedene relative Biegemomente,
- Figur 4: eine Darstellung einer Gleich-Biegemoment-Kennlinie, die mit der Tragfähigkeitskennlinie übereinstimmt,
- Figur 5: eine Darstellung von Gleich-Biegemoment-Kennlinien, die nicht mit der Tragfähigkeitskennlinie übereinstimmen und
- Figur 6: eine Darstellung einer Selektion einer adäquaten Gleich-Biegemoment-Kennlinie durch Berücksichtigung des gemessenen Lastgewichts.

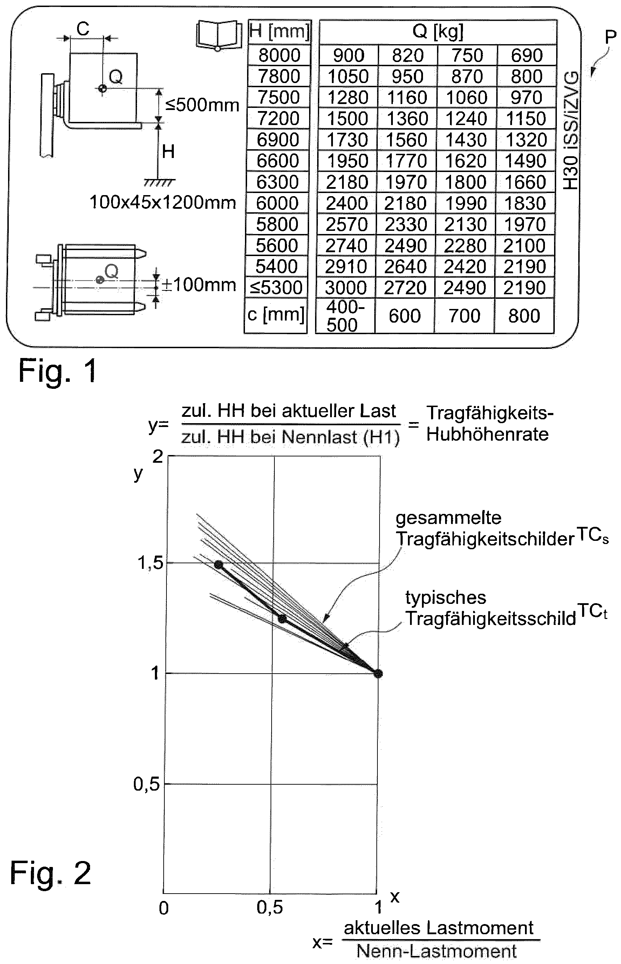

Figur 1 zeigt ein Tragfähigkeitsschild P eines, als Gabelstapler ausgebildeten, Flurförderzeugs. Anhand dieses Tragfähigkeitsschildes P werden im Folgenden die physikalischen Grundlagen für die Erfindung erläutert.

Ein wesentliches Merkmal der Erfindung besteht darin, dass das Signal der Biegemoment-Sensorik, insbesondere des Dehnungs-Mess-Sensors (DMS), im oberen Drittel des Hubgerüstes des Flurförderzeugs, ein Richtmaß für eine Bewertung der Einhaltung der Tragfähigkeit im Ganzen darstellt. Dieses grobe Richtmaß kann in Kombination mit einer Lastgewichts-Information und/oder Lastmoment-Information verfeinert werden. Die Verfeinerungsmöglichkeit durch Einbeziehung des Lastgewichts setzt eine zumindest grobe Kenntnis der Lastschwerpunktposition voraus. Die idealere Größe für die möglicherweise angestrebte Verfeinerung stellt das Lastmoment dar, das mit preiswerten Sensoren, beispielsweise ein Neigedrucksensor erfasst werden kann. Gemäß einer vorteilhaften Ausführungsform der Erfindung weist das Flurförderzeug ein Hubgerüst auf, das einen Hauptmast und mindestens einen, am Hauptmast höhenbeweglich angeordneten, Ausfahrmast, wobei durch Ausfahren des Ausfahrmastes das Lastaufnahmemittel auf eine gewünschte Hubhöhe gehoben werden kann. Die Biegemoment-Sensorik ist im oberen Bereich, insbesondere im oberen Drittel, des Hauptmastes angeordnet ist. Bevorzugt ist die Biegemoment-Sensorik im Wesentlichen an derselben Höhenposition des Hauptmastes angeordnet, an der sich bei vollständig angehobenem Ausfahrmast der Ausfahrmast am Hauptmast abstützt, beispielsweise mittels entsprechenden am unteren Bereich des Ausfahrmastes angeordneten Mastrollen, mit denen der Ausfahrmast am Hauptmast geführt. Die Biegemoment-Sensorik ist somit idealerweise am Hauptmast auf derselben Höhe angeordnet wie die im Hauptmast geführte untere Mastrolle des Ausfahrmastes im vollständig angehobenem Zustand des Ausfahrmastes.

Die erste Anforderung an ein adäquates Richtmaß für die Einhaltung der Tragfähigkeit ist folgende:
Für eine gegebene Hubhöhe ist die Tragfähigkeit abhängig vom Lastmoment. Das DMS-Signal ist, physikalisch bedingt, abhängig vom Lastmoment. Erhöht sich zum Beispiel der Lastschwerpunktabstand, dann erfordert das Tragfähigkeitsschild P von Figur 1, dass das Lastgewicht in umgekehrtem Verhältnis zum Last- Hebelarm (Lastschwerpunktposition + Vorbaumaß) reduziert wird, damit das Lastmoment unverändert bleibt.

Dies hat folgende Auswirkung: Bei den angegebenen Arbeitspunkten auf einer gleichen horizontalen Linie auf dem Tragfähigkeitsschild P liefert das DMS-Signal denselben Wert, also denselben Tragfähigkeitseinhaltungs-Richtwert.

Die zweite Anforderung an ein Richtmaß für die Einhaltung der Tragfähigkeit besteht darin, dass dieses Richtmaß idealerweise bei Variationen von Lastmoment und Hubhöhe entlang der Tragfähigkeitskennlinie konstant bleibt. Dabei weisen alle Tragfähigkeitskennlinien, zumindest die der Gegengewichtsstapler neuer Generation, eine sehr ähnliche Form mit folgendem Merkmal auf: Von Nennlast auf halber Nennlast erhöht sich die zulässige Hubhöhe um etwa ein Drittel im Durchschnitt und zwischen etwa 20% bis 40% über alle Tragfähigkeitsschilder P.

Figur 2 zeigt eine Darstellung von Tragfähigkeitskennlinien TCₛ verschiedener Tragfähigkeitsschilder P verschiedener Gabelstapler in normierter Form. In diesem Beispiel sind die Tragfähigkeitskennlinien TCₛ von mehreren Tragfähigkeitsschildern P für eine bestimmte Baureihe eines Gabelstaplers in normierter Form übereinander gelegt. Bei dieser normierten Form der Darstellung sind auf der x-Achse das normierte Lastmoment im Verhältnis zum Nenn-Lastmoment und auf der y-Achse die zulässige Hubhöhe bei aktueller Last im Verhältnis zur zulässigen Hubhöhe bei Nennlast aufgetragen. Die Linien TCₛ zeigen die gesammelten Tragfähigkeitskennlinien TCₛ der mehreren Tragfähigkeitsschilder P. Die Linie TCₜ zeigt die typische Tragfähigkeitskennlinie TCₜ.

Zu dieser Form der Darstellung ist folgendes zu bemerken:
Üblicherweise wird bei den Tragfähigkeitsschildern P die maximal zulässige Hubhöhe (y-Achse) in Abhängigkeit vom Lastgewicht (x-Achse ) dargestellt. Um die Ähnlichkeit der allgemeinen Form der Tragfähigkeitskennlinien TCₛ, TCt untereinander zu verdeutlichen, wird in Figur 2 eine normierte Form der Darstellung benutzt.

Hierbei ist noch folgendes zu beachten:
Bei der Belegung der x-Achse in den üblichen Tragfähigkeits-Diagrammen mit dem Lastgewicht geht man von einer bestimmten Lastschwerpunktposition (oft 500 mm) aus. Aber das Tragfähigkeitsschild P zeigt für eine gegebene Hubhöhe nicht nur ein Lastgewicht, sondern mehrere für verschiedene Lastschwerpunktpositionen. Physikalisch haben diese verschiedenen Lastgewichtsangaben mit den verschiedenen Lastschwerpunktpositionen einen gemeinsamen Nenner, und zwar dasselbe Lastmoment. Aus diesem Grund, und um die Gemeinsamkeit mit dem DMS-Signal besser zu verdeutlichen, wird in Figur 2 die x-Achse der dargestellten Tragfähigkeitskennlinien TCₛ, TCₜ mit dem Lastmoment belegt.

Entscheidend ist hierbei folgende Feststellung:
Gemäß einer Kurve mit sehr ähnlicher Form wie die der abgebildeten Tragfähigkeitskennlinien TCₛ, TCₜ hängen die Hubhöhe und das Lastmoment bei konstant gehaltenem DMS-Signal zusammen.

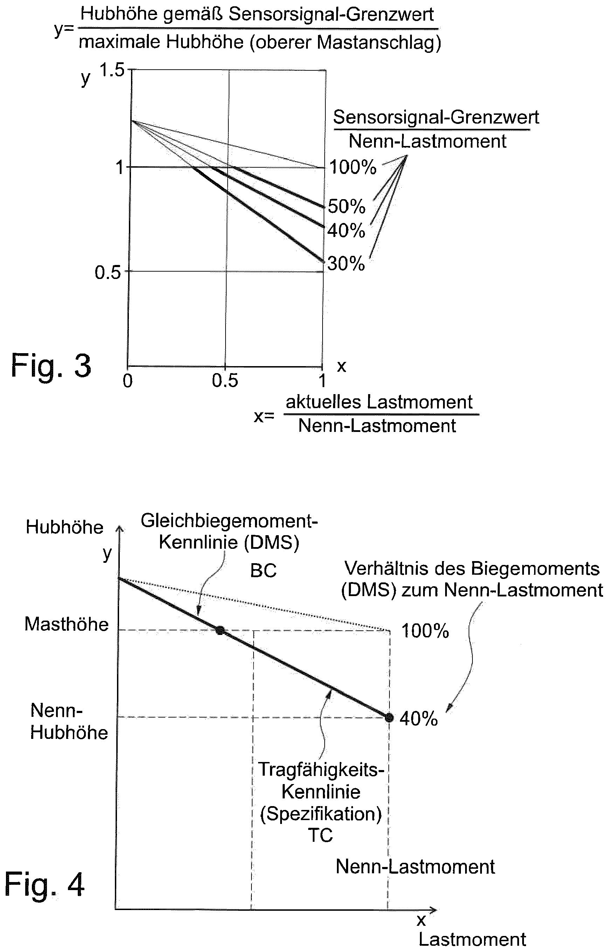

Figur 3 zeigt eine Darstellung von Kennlinien der relativen Hubhöhe (im Verhältnis zur maximalen Hubhöhe) in Abhängigkeit vom relativen Lastmoment (im Verhältnis zum Nenn-Lastmoment) für verschiedene relative Biegemomente (im Verhältnis zum Nenn-Lastmoment). Dabei ist auf der x-Achse das aktuelle Lastmoment im Verhältnis zum Nenn-Lastmoment aufgetragen. Auf der y-Achse ist die Hubhöhe gemäß Sensorsignal-Grenzwert im Verhältnis zur maximalen Hubhöhe beim oberen Mastanschlag aufgetragen. Die Werte 100%, 50%, 40% und 30% geben die Sensorsignal-Grenzwerte im Verhältnis zum Nenn-Lastmoment an.

Diese Darstellung ist wie folgt zu interpretieren:
Ein gegebener Wert des DMS-Signals, entsprechend 30% des Nenn-Lastmoments, wird mit Nenn-Lastmoment auf dem Lastaufnahmemittel, zum Beispiel den Gebelzinken des Gabelstaplers, bei 53% der maximalen Hubhöhe erreicht, und mit halbem Nenn-Lastmoment bei 87% der maximalen Hubhöhe, also 1,625 x höher als mit Nenn-Lastmoment. Die maximale Hubhöhe kann dann mit nur 30% vom Nenn-Lastmoment erreicht werden (siehe untere Kennlinie).

Ein gegebener Wert des DMS-Signals, entsprechend 40% des Nenn-Lastmoments, wird mit Nenn-Lastmoment auf den Gabelzinken bei 70% der maximalen Hubhöhe erreicht, und mit halbem Nenn-Lastmoment bei 95% der maximalen Hubhöhe, also 1,36 x höher als mit Nenn-Lastmoment. Die maximale Hubhöhe kann dann mit nur 40% vom Nenn-Lastmoment erreicht werden (siehe mittlere Kennlinie).

Ein gegebener Wert des DMS-Signals entsprechend 50% des Nenn-Lastmoments wird mit Nenn-Lastmoment auf den Gabelzinken bei 80% der maximalen Hubhöhe erreicht, und mit halbem Nenn-Lastmoment bei 100% der maximalen Hubhöhe, also 1,25 x höher als mit Nenn-Lastmoment (siehe obere Kennlinie).

Mit einer um den Faktor 1,25 beziehungsweise 1,36 höheren Hubhöhe bei halbem Nenn-Lastmoment als mit Nenn-Lastmoment und mit einer Hubhöhe bei Nennlast von 70% beziehungsweise 80% der maximalen Hubhöhe sind die beiden oberen Kennlinien sehr vergleichbar mit den sonst üblichen Tragfähigkeitskennlinien.

Eine solche Übereinstimmung ermöglicht eine sehr einfache Charakterisierung der Tragfähigkeit über das DMS-Signal:
Überschreitet das DMS-Signal einen gewissen Biegemoment-Schwellwert (zum Beispiel 40% beziehungsweise 50% des Nenn-Lastmoments), dann ist die Tragfähigkeit überschritten, und wenn nicht, dann ist die Tragfähigkeit nicht überschritten.

Liegt die Nenn-Hubhöhe (Hubhöhe bei Nenn-Lastmoment) allerdings deutlich höher als 80% der maximalen Hubhöhe oder umgekehrt deutlich niedriger als 70% der maximalen Hubhöhe, dann ist das DMS-Signal bei Änderungen entlang der Tragfähigkeitskennlinie nicht mehr wie dargestellt konstant, und das DMS-Signal als fertiges Richtmaß allein für die Bewertung der Einhaltung der Tragfähigkeit funktioniert nicht mit derselben Genauigkeit.

An dieser Stelle muss jedoch angemerkt werden, dass der hier vorgestellte Ansatz, wenn auch nur basierend auf dem DMS-Signal allein, in Bezug auf die Kontrolle der Tragfähigkeit viel performanter ist, als der bisherige Ansatz bei den bekannten Tragfähigkeits-Kontrolleinrichtungen, welche die Hubhöhe nur binär über einen Hubhöhen-Schalter und das Lastmoment überhaupt nicht erfassen. Zumindest für einen bestimmten Last-Bereich, den man sich aussuchen kann, funktioniert der neue Ansatz mit hoher Genauigkeit; nur weiter entfernt von diesem Bereich und bei gewissen Fahrzeugen kann die Genauigkeit nachlassen.

Des Weiteren gibt es verschiedene Ansätze, wie man mit einer nicht exakten Übereinstimmung der Tragfähigkeitskennlinie mit einer Gleich-Biegemoment-Kennlinie umgehen kann. Das ist das Thema der folgenden Abschnitte.

Figur 4 zeigt eine Darstellung einer Gleich-Biegemoment-Kennlinie BC, die mit der Tragfähigkeitskennlinie TC übereinstimmt. In dieser Darstellung sind auf der x-Achse das Lastmoment und auf der y-Achse die Hubhöhe aufgetragen. Die Gleich-Biegemoment-Kennlinie BC ist dadurch charakterisiert, dass das DMS-Signal entlang dieser Kennlinie konstant bleibt. Figur 4 illustriert den Idealfall, bei welchem die Gleich-Biegemoment-Kennlinie BC und die Tragfähigkeitskennlinie TC übereinstimmen.

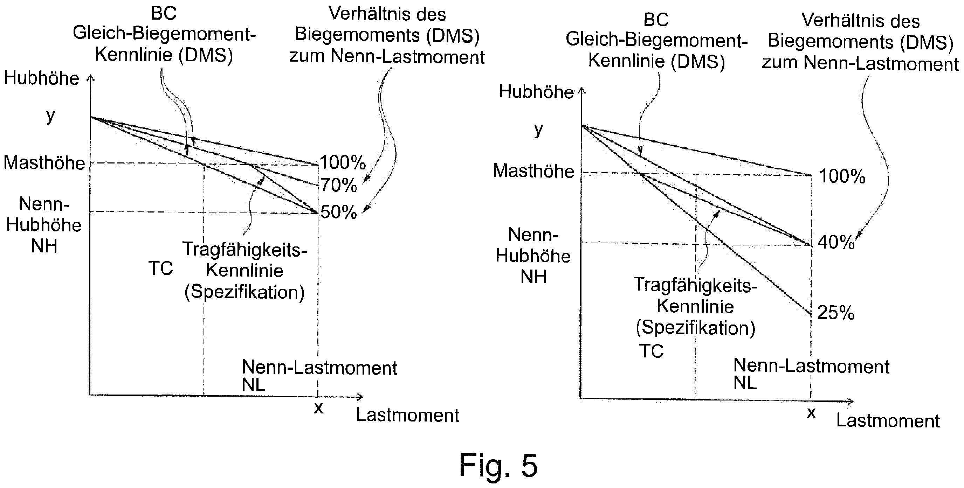

Es kann aber sein, wie im linken Bild von Figur 5 dargestellt, dass die spezifizierte Tragfähigkeitskennlinie TC steiler abfällt als die Gleich-Biegemoment-Kennlinie BC in ihrer Nähe, was tendenziell der Fall ist, wenn die Nenn-Hubhöhe nicht weit entfernt ist von der maximalen Hubhöhe.

Umgekehrt kann es auch sein, wie im rechten Bild von Figur 5 dargestellt, dass die spezifizierte Tragfähigkeitskennlinie TC schwächer abfällt als die Gleich-Biegemoment-Kennlinie BC in ihrer Nähe, was tendenziell der Fall, wenn die Hubhöhe bei Nennlast weit entfernt ist von der maximalen Hubhöhe.

In beiden Fällen kommt die Tragfähigkeitskennlinie TC mit mehreren Gleich-Biegemoment-Kennlinien BC in Berührung, die alle nur partiell als Richtmaß für die Einhaltung der Tragfähigkeit geeignet wären.

Wenn man sich für eine der in Frage kommenden Gleich-Biegemoment-Kennlinien BC entscheiden soll, dann empfiehlt es sich, im Allgemeinen die Kennlinie, die durch den Punkt "Nenn-Lastmoment NL / Nenn-Hubhöhe NH" am rechten Ende durchgeht, auszuwählen. Dabei handelt es sich beim linken Bild der Figur 5 um die untere Gleich-Biegemoment-Kennlinie BC mit dem Label 50% und beim rechten Bild der Figur 5 um die obere Gleich-Biegemoment-Kennlinie BC mit dem Label 40%.

Nur in einer Situation mit starker Mastrückneigung des Hubgerüstes im Falle der Darstellung des rechten Bildes von Figur 5 wäre dies nicht empfehlenswert. Zur Begründung wird hierzu folgendes ausgeführt:
Auf dem linken Bild von Figur 5 führt die Wahl der unteren Gleich-Biegemoment-Kennlinie BC zu einer höheren Absicherung in Bezug auf die Kippstabilität, aber auch zu einer Reduzierung der Lasthandling-Performance. Allerdings ist der Einsatzbereich, in welchem diese Reduzierung von Relevanz sein kann, relativ klein (ausreichend weit entfernt vom Kennlinien-Stützpunkt "Nenn-Lastmoment NL / Nenn-Hubhöhe NH" und vom oberen Mastanschlag). Dadurch spielt die Reduzierung der Lasthandling-Performance in der Praxis kaum eine Rolle. Zusätzlich besteht für den Fahrer des Gabelstaplers die Möglichkeit, durch leichtes Rückneigen des Hubgerüstes (zum Beispiel um 1°) das Lastmoment leicht zu reduzieren und somit die mangelnde Lasthandling-Performance zu kompensieren. Aufgrund der Messtoleranzen kann mit senkrechtem Hubgerüst die spezifizierte Lasthandling-Performance nicht erreicht werden. Erst bei leichter Rückneigung des Hubgerüstes ist es möglich.

Auf dem rechten Bild von Figur 5 führt die Wahl der oberen Gleich-Biegemoment-Kennlinie BC wiederum zu einer Erhöhung der Lasthandling-Performance und zu einer niedrigeren Absicherung in Bezug auf die Kippstabilität. Von Bedeutung ist aber dieses Verhalten nur bei niedrigerer Last und niedrigem Lastmoment. In Bezug auf die Gefahr, dass der Gabelstapler nach vorn kippt, ist eine solche Überschreitung bekanntlich unkritisch. Gefährlich in dieser Situation ist nur das Kippen des Gabelstaplers zur Seite. Die Tragfähigkeit ist allerdings für eine maximale Rückneigung des Hubgerüstes definiert. Mit senkrechtem oder nur leicht zurückgeneigtem Hubgerüst besteht ein gewisses Überschreitungspotential, das hier ausgeschöpft werden kann. Ob das Überschreitungspotential bezüglich der seitlichen Kippstabilität ausreicht oder nicht, hängt von der Ausprägung der Unstimmigkeit zwischen der Tragfähigkeitskennlinie TC und der Gleich-Biegemoment-Kennlinie BC ab.

Zur Problematik der Hubgerüst-Rückneigung ist folgendes anzumerken:
Bei der bisherigen Betrachtung ist man von einer weitgehenden Senkrechtstellung des Hubgerüstes ausgegangen. Es stellt sich die Frage, was bei dem Ansatz passiert, wenn das Hubgerüst geneigt ist.

Das DMS-Signal hängt grundsätzlich von der Hubhöhe und vom Lastmoment ab. Bei gegebener Hubhöhe bewirkt eine Neigung des Hubgerüstes eine Änderung des Lastmoments und somit des DMS-Signals. Beim Vorneigen des Hubgerüstes, was mit angehobener Last grundsätzlich nicht erlaubt ist, erhöht sich das Lastmoment und somit auch der Wert des DMS-Signals. Diese Erhöhung weist auf eine kritischere Situation hin. Beim Rückneigen des Hubgerüstes wiederum wird das Lastmoment kleiner und somit auch der Wert des DMS-Signals. Das ist aber in Bezug auf die seitliche Kippstabilität des Gabelstaplers nicht richtig. Eine naheliegende Maßnahme, um diesem Verhalten entgegen zu wirken, besteht darin, eine Abhängigkeit des Neigewinkels des Hubgerüstes bei der Betrachtung des DMS-Signals als Richtmaß einlaufen zu lassen. Anstatt einer konstanten Schwelle als Richtmaß für die Einhaltung der Tragfähigkeit kann man eine Neigewinkel-abhängige Schwelle betrachten.

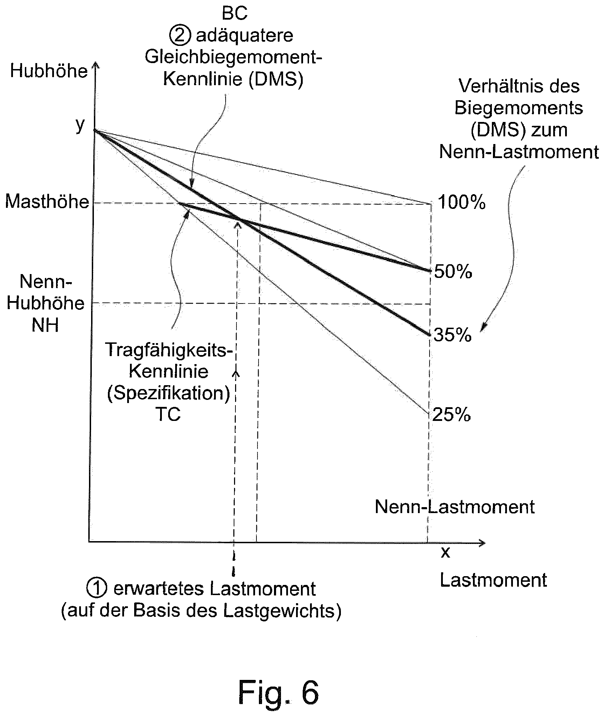

Figur 6 zeigt eine Darstellung einer Selektion einer adäquaten Gleich-Biegemoment-Kennlinie BC durch Berücksichtigung des gemessenen Lastgewichts. In dieser Darstellung sind wieder auf der x-Achse das Lastmoment und auf der y-Achse die Hubhöhe aufgetragen. Figur 6 betrifft die Einbindung des Lastgewichts als Hilfsgröße zur Weiteroptimierung der Tragfähigkeits-Kontrolle.

In Bezug auf die Einhaltung der Tragfähigkeit ist die Lastgewichts-Information nicht von großem Nutzen, wenn gar keine Annahme über die Lastschwerpunkt-Position getroffen werden kann, weil das Lastmoment ebenfalls komplett unbestimmt ist. Ist man jedoch in der Lage, eine Annahme über die Lastschwerpunkt-Position zu treffen, wenn auch nur in der Form einer Einschränkung des den in Frage kommenden VariationsBereichs, dann kann diese Information von großem Nutzen sein für eine feinere Abstimmung des DMS-Signal-basierenden Richtmaßes für die Einhaltung der Tragfähigkeit. Es ermöglicht eine Abschätzung des Lastmoments, anhand welcher die adäquatere aller in Frage kommenden Gleich-Biegemoment-Kennlinien BC ausgewählt werden kann.

Figur 6 illustriert anhand eines Beispiels, wie diese feinere Abstimmung stattfindet:
Die zu selektierende Gleich-Biegemoment-Kennlinie BC soll bei dem erwarteten Lastmoment die spezifizierte Tragfähigkeitskennlinie treffen. Im Beispiel ist es die Gleich-Biegemoment-Kennlinie BC, bei welcher das Biegemoment (DMS-Signal) 35% des Nenn-Lastmoments beträgt.

Diese Lastgewichts-Information kann zu einer erheblichen Verbesserung der Genauigkeitsproblematik des DMS-Ansatzes beitragen. Die Lastgewichts-Information ist nämlich die Kern-Größe des von den Maschinenrichtlinien angeforderten Überlastschutzes. Die Lastgewichts-Information ist auch die Kern-Größe einer sehr beliebten Funktion einer Lastgewicht-Anzeige, und die Lastgewichts-Information kann mittels eines Lastdruck-Sensors sehr kostengünstig erfasst werden.

## Patentansprüche

1. Flurförderzeug mit einem Hubgerüst und einem, am Hubgerüst höhenbeweglich angeordneten, Lastaufnahmemittel und einer Tragfähigkeits-Kontrolleinrichtung zur Kontrolle der Tragfähigkeit des Flurförderzeugs, **dadurch gekennzeichnet, dass** die Tragfähigkeits-Kontrolleinrichtung mindestens eine Biegemoment-Sensorik umfasst, die dazu ausgebildet ist, ein Biegemoment in einem oberen Bereich des Hubgerüstes zu erfassen, sowie eine, mit der Biegemoment-Sensorik in Wirkverbindung stehende, Datenverarbeitungseinrichtung umfasst, die dazu eingerichtet ist, die Sensordaten der Biegemoment-Sensorik auszuwerten und die Einhaltung der Tragfähigkeit des Flurförderzeugs durch Einhaltung einer Gleich-Biegemoment-Kennlinie (BC) mit gleichen Biegemomenten zu kontrollieren.

2. Flurförderzeug nach Anspruch 1, **dadurch gekennzeichnet, dass** die Tragfähigkeits-Kontrolleinrichtung zusätzlich mindestens eine Lastgewicht-Sensorik umfasst, die ebenfalls mit der Datenverarbeitungseinrichtung in Wirkverbindung steht, und die Datenverarbeitungseinrichtung dazu eingerichtet ist, die Sensordaten der Lastgewicht-Sensorik zusätzlich zu den Sensordaten der Biegemoment-Sensorik auszuwerten und eine Lastgewicht-spezifische Gleich-Biegemoment-Kennlinie (BC) zu bestimmen.

3. Flurförderzeug nach Anspruch 1 oder 2, **dadurch gekennzeichnet, dass** die Datenverarbeitungseinrichtung über ein Computerprogramm mit einem Algorithmus verfügt, der dazu eingerichtet ist, die Gleich-Biegemoment-Kennlinie an eine vorgegebene, Fahrzeug-spezifische, Tragfähigkeitskennlinie (TC) anzunähern.

4. Flurförderzeug nach Anspruch 3, **dadurch gekennzeichnet, dass** das Computerprogramm über eine Einlernfunktion verfügt, die dazu eingerichtet ist, die bei einer Ansteuerung von Punkten auf der Tragfähigkeitskennlinie (TC) von der Biegemoment-Sensorik erfassten Biegemomente abzuspeichern und als Stützpunkte zur Bestimmung der Gleich-Biegemoment-Kennlinie (BC) zu verwenden.

5. Flurförderzeug nach Anspruch 4, **dadurch gekennzeichnet, dass** die Einlernfunktion dazu eingerichtet ist, die bei der Ansteuerung der Punkte auf der Tragfähigkeitskennlinie (TC) von der Lastgewicht-Sensorik erfassten Lastgewichte ebenfalls abzuspeichern und zur Bestimmung der Lastgewicht-spezifischen Gleich-Biegemoment-Kennlinie (BC) zu verwenden.

6. Flurförderzeug nach einem der Ansprüche 1 bis 5, **dadurch gekennzeichnet, dass** die Datenverarbeitungseinrichtung dazu eingerichtet ist, bei Überschreitung eines vorgegebenen Biegemoment-Schwellwertes eine Überschreitung der Tragfähigkeit des Flurförderzeugs zu erkennen und eine Reaktionsfunktion einzuleiten.

7. Flurförderzeug nach Anspruch 6, **dadurch gekennzeichnet, dass** die Datenverarbeitungseinrichtung dazu eingerichtet ist, die Überschreitung des vorgegebenen Biegemoment-Schwellwertes bei einer Überschreitung eines vorgegebenen Wertes, insbesondere von 40%, bevorzugt 50%, eines Fahrzeug-spezifischen Nenn-Lastmoments zu erkennen.

8. Flurförderzeug nach Anspruch 6 oder 7, **dadurch gekennzeichnet, dass** die Datenverarbeitungseinrichtung dazu eingerichtet ist, als Reaktionsfunktion eine Warnmeldung an eine, mit der Datenverarbeitungseinrichtung in Wirkverbindung stehende, optische und/oder akustische Warneinrichtung auszugeben.

9. Flurförderzeug nach einem der Ansprüche 6 bis 8, **dadurch gekennzeichnet, dass** die Datenverarbeitungseinrichtung dazu eingerichtet ist, als Reaktionsfunktion regelnd in eine, mit der Datenverarbeitungseinrichtung in Wirkverbindung stehende, Fahrzeugsteuerungseinrichtung einzugreifen.

10. Flurförderzeug nach einem der Ansprüche 1 bis 9, **dadurch gekennzeichnet, dass** die Biegemoment-Sensorik mindestens einen Dehnungs-Mess-Sensor umfasst, der im oberen Bereich des Hubgerüstes angeordnet ist.

11. Flurförderzeug nach einem der Ansprüche 1 bis 10, **dadurch gekennzeichnet, dass** das Hubgerüst mindestens einen Hauptmast und mindestens einen, am Hauptmast höhenbeweglich angeordneten, Ausfahrmast aufweist, wobei durch Ausfahren des Ausfahrmastes das Lastaufnahmemittel auf eine gewünschte Hubhöhe gehoben werden kann, und die Biegemoment-Sensorik, insbesondere der Dehnungs-Mess-Sensor, im oberen Bereich, insbesondere im oberen Drittel, des Hauptmastes angeordnet ist.
